# EUROPEAN PATENT APPLICATION

(11) **EP 4 489 453 A1**
(43) Date of publication of application: **08.01.2025**
(21) Application number: 23275100.8
(22) Date of filing: 06.07.2023
(51) Int. Cl.: H04W 8/12, H04W 48/18

(54) **METHODS RELATING TO MOBILE DEVICES**

(71) Applicant: Wadaro Solutions Limited, Daresbury Cheshire WA4 4FS (GB)
(72) Inventor: WAKELING, Robert David, Daresbury (GB)
(74) Representative: Mewburn Ellis LLP

(57) **Abstract**

There is provided a method of managing a roaming mobile device, comprising: receiving a first status update from a mobile device, the first status update comprising: roaming information indicating that the mobile device is connected to a first network, and location information indicative of a geographic location of the mobile device; accessing map information which, for each of a plurality of networks, includes network connection information relating to a geographic area, wherein the plurality of networks includes the first network and a second network, wherein the geographic area includes the geographic location of the mobile device; and issuing a steering command to the mobile device to instruct the mobile device to terminate connection with the first network and to establish connection with the second network of the plurality of networks, wherein issuing the steering command is based on the network connection information.

## Description

### Field of the Invention

The present invention relates to a method of steering a mobile device, a method of operating a mobile device, and a method of mapping network coverage.

### Background

Roaming of a mobile telecommunication device refers to a situation where said device is brought outside of a home network and into a so-called visited network of another operator, i.e. a third party network operator. As such, roaming describes the maintaining of connectivity of the mobile device in an area without coverage by the home network, to ensure that a subscriber to the home network can continue to, e.g., make and receive voice calls, or exchange data when located away from the home network.

An exemplary situation in which roaming may be encountered is travel abroad. Upon reaching a foreign country, a mobile telecommunication device will attempt connection with a network accepting connection based on a roaming agreement between the operator of the home network and the operator of the visited network. This situation is referred to as "international roaming".

Another example situation in which roaming may be encountered is where a network operator has incomplete network coverage and has roaming agreements with other network operators of the same country in order to provide national coverage to subscribers. This situation is referred to as "national roaming".

The present invention has been devised in light of the above considerations.

### Summary of the Invention

In some situations, a home network operator may have multiple roaming agreements with other network operators covering generally the same area. For example, the home network operator may have two roaming agreements with network operators covering another geographical area, e.g. another country. Upon entering this other geographical area, a mobile device of a subscriber of the home network operator may then connect to a network of either network operator in that other geographical area.

While the home network operator has some control, e.g. in the form of a preferred network list which will be attempted by the device in a specified order, it may so happen that connection is made to a visited network which is less desirable for the subscriber and/or the home network operator. For example, some of the networks may simply not be visible initially, and connection is then made to a visible network which happens to be less desirable.

Moreover, the device will typically remain connected unless the device loses connection or action is taken to terminate connection. As such, it may happen that the subscriber continues to be connected to a visited network when in fact another network would be preferable for the subscriber and/or the network operator. Notable deciding factors may be that some networks offer a better service quality to the subscriber, or some networks incurs less cost to the home network operator.

While the home network operator could in principle take action to redirect the subscriber to a different visited network, in some situations the home network operator has no information on the basis of which an informed decision could be made. For example, the home network operator would not be able to control the roaming device, i.e. to "steer", to disconnect from the more expensive network and the connect to the cheaper network since the home network operator would not know whether the cheaper network is available at all. Similarly, the home network operator would not be able to control the roaming network device to connect to the network believed to provide best service quality, since the home network operator does not have information on which to assess service quality.

According to a first aspect, there is provided a method of managing a roaming mobile device. The method comprises receiving a first status update from a mobile device, the first status update comprising: roaming information indicating that the mobile device is connected to a first network, and location information indicative of a geographic location of the mobile device; accessing map information which, for each of a plurality of networks, includes network connection information relating to a geographic area, wherein the plurality of networks includes the first network and a second network; wherein the geographic area includes the geographic location of the mobile device; and issuing a steering command to the mobile device to instruct the mobile device to terminate connection with the first network and to establish connection with the second network of the plurality of networks, wherein issuing the steering command is based on the network connection information.

Using the method of managing the roaming mobile device, a steering command is issued based on map information relating to the geographic area which includes the geographic location of the mobile device. Issuing the steering command is based network connection information included in the map information. The network connection information relates to a plurality of networks including a first roaming network, to which the mobile device connected `by default', and a second network, to which the mobile device is steered based on the network connection information. As such, the method of managing the roaming mobile device allows steering of mobile devices where multiple networks are available for the mobile device to connect to. In use, this may allow connection to a preferred network, i.e. the second network (e.g. the home network, or a preferred roaming network). Thus, the present method of managing the roaming mobile device improves traditional methods whereby a roaming mobile device establishes a connection with a given network and maintains connection with this network.

Optionally, issuing the steering command includes using the map information to compare the network connection information of the first network and the network connection information of the second network recorded for the first geographic location.

The map information may record network connection information relating to the first geographic location which may not be available to the mobile device, although the mobile device may be located at the first geographic location. For example, where the mobile device connects to the first network without scanning for other network options, the mobile device may have no information about other networks.

Optionally, issuing the steering command includes using the map information to compare the network connection information of the first network and the network connection information of the second network recorded for a second geographic location, wherein the second geographic location is different from the first geographic location.

By comparing connection performance at a second geographic location, issuing the steering command may be based on connection performance at a location other than the first location of the mobile device and, therefore, be based on information that may not be available to the mobile device at its current geographic location.

Optionally, the network connection information includes a first network priority factor associated with connection of the mobile device to the first network and a second network priority factor associated with connection of the mobile device to the second network.

Optionally, issuing the steering command includes comparing the first network priority factor and the second network priority factor.

By referring to network connection information, it may be possible to issue a steering command based, for example, on a priority factor associated with each network. The priority factor may be indicative of, for example, cost associated with using a network.

Optionally, the network connection information includes a first network service quality factor associated with connection of the mobile device to the first network and a second network service quality factor associated with connection of the mobile device to the second network.

Optionally, issuing the steering command includes comparing the first network service quality factor and the second network service quality factor.

By referring to network connection information, it may be possible to issue a steering command based, for example, on a service quality factor associated with each network. The service quality factor may be indicative of at least one of: the number of network radio link failures; the ratio of successful call setups over all call setups; the ratio of successful call ends over all call ends; latency and throughout of data; the number of attempts for successful SMS message submission.

Optionally, the first status update further includes information about connection performance of the first network at the geographic location of the mobile device.

Optionally, the method further comprises updating the map information based on the first status update.

By including information about connection performance in the first status update, the map information may be updated as mobile phones enter the geographic area without requiring a separately performed mapping process, such as "drive test" mapping.

Optionally, the network connection information comprises signal strength information of the first network within the geographic area, and the network connection information comprises signal strength information of the second network within the geographic area.

Optionally, issuing the steering command includes comparing the signal strength information of the first network and the signal strength information of the second network.

Optionally, the second network is either a second roaming network or the second network is the home network. Where the second network is the home network, the steering command instructing the mobile device to establish connection with the second network causes the mobile device to cease roaming.

Optionally, the method further comprises calculating the geographic location of the mobile device using the location information.

The location information received from the mobile device may include explicit location information, such as longitude and latitude, or may include information from which the position information may be derived. For example, the location information may include GPS measurements from which a location may be calculated.

Optionally, the method may further comprise receiving a second status update from the mobile device including: roaming information indicating that the mobile device is connected to the second network, location information indicative of a second geographic location of the mobile device; issuing a second steering command to the mobile device to instruct the mobile device to terminate connection with the second network and to establish connection with the first network or a third network of the plurality of networks, wherein issuing the second steering command is based on the network connection information.

Conventional managing of a roaming mobile device may not include steering to a second network and subsequently steering the mobile device away from the second network even where circumstances, such as geographic location within the geographic area, may have changed such that a different network becomes preferable. By contrast, the map information enables repeatedly steering of a roaming mobile device.

According to a second aspect, there is provided a method of operating a roaming mobile device. The method comprises connecting the mobile device to a first network; measuring first location information indicative of a first geographic location of the mobile device within a first geographic area; transmitting a first status update via the first network, the first status update comprising: roaming information indicating that the mobile device is connected to the first network, and the first location information; terminating connection with the first network and establishing connection with a second network in response to receiving a steering command instructing the mobile device to terminate connection with the first network and establish connection with the second network.

Optionally, the method further comprises measuring connection performance of the first network at the geographic location of the mobile device.

Optionally, the first status update further includes information indicative of the connection performance measured by the mobile device.

Optionally, the method further comprises measuring second location information indicative of a second geographic location of the mobile device.

Optionally, the method further comprises transmitting a second status update via the second network.

Optionally, the second status update comprises the second geographic location information.

Optionally, the method further comprises receiving a second steering command, the second steering command instructing the mobile device to terminate connection with the second network and to establish connection with the first network or a third network.

Optionally, measuring the second location information is conditional on at least one of: changing from a first cell site of the second network to a second cell site of the second network, or elapsing of a predetermined time interval from measuring the first location information.

According to a third aspect, there is provided a SIM (subscriber identity module), optionally provided as a SIM card or an e-SIM, for use with a mobile device, the SIM including instructions to perform the method according to the second aspect.

According to a fourth aspect, there is provided a method of mapping a roaming network. The method comprises: receiving a first status update from a first mobile device comprising: first roaming information indicating that the first mobile device is connected to a first network; first location information indicative of a first geographic location of the first mobile device, and information indicative of connection performance with the first network by the first mobile device at the first geographic location of the first mobile device; receiving a second status update from a second mobile device comprising: second roaming information indicating that the second mobile device is connected to the first network; second location information indicative of a geographic location of the second mobile device, and information indicative of connection performance with the first network by the second mobile device at the geographic location of the second mobile device; accessing map information which, for each of a plurality of networks, includes network connection information relating to a geographic area, wherein the plurality of networks includes the first network; wherein the geographic area includes the first geographic location of the first mobile device and the geographic location of the second mobile device; and updating the connection performance relating to the first network based on the first status update and the second status update.

Optionally, the method comprises receiving a third status update from the first mobile device, the third status update comprising: third roaming information indicating that the first mobile device is connected to the first network; third location information indicative of a second geographic location of the first mobile device, and information indicative of connection performance with the first network by the first mobile device at the second geographic location of the first mobile device; accessing the map information; updating the network connection information relating to the first network based on the third status update.

Optionally, the method comprises receiving a fourth status update from the first mobile device, the fourth status update comprising: fourth roaming information indicating that the first mobile device is connected to a second network of the plurality of networks; fourth location information indicative of a third geographic location of the first mobile device, and information indicative of connection performance with the second network by the first mobile device at the third geographic location of the first mobile device; and accessing the map information, updating the network connection information relating to the second roaming network based on the fourth status update.

According to a fifth aspect, there is provided a computer-readable storage medium storing thereon map information obtained by the method of according to the fourth aspect.

### Summary of the Figures

Embodiments illustrating the principles of the invention will now be discussed with reference to the accompanying figures in which:
**Figure 1** shows a telecommunication system including a mobile device connected to a first roaming network.
**Figure 2** illustrates a method of managing the mobile device by a server and operating the mobile device.
**Figure 3** illustrates a method of managing the mobile device by a server.
**Figure 4** illustrates a method of operating the mobile device.
**Figure 5** shows a telecommunication system including the mobile device connected to a roaming network.
**Figure 6** shows a telecommunication system including the mobile device connected to a home network.
**Figure 7** illustrates map information.
**Figure 8** illustrates network connection information.
**Figure 9** illustrates a method of updating the map information.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

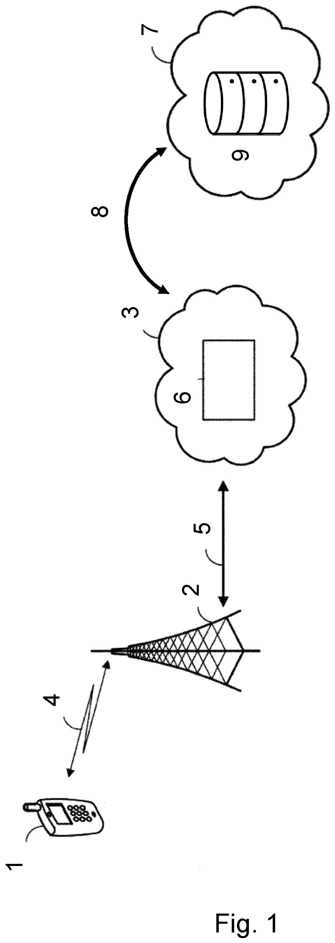

Figure 1 shows a telecommunication system including a mobile telecommunications device 1. The mobile telecommunications device 1, or "mobile device" 1 for short, can connect to a first cell site 2, which is part of a first roaming network 3. The first roaming network 3 may also be referred to as a first visited network, or a Visited Public Land Mobile Network (VPLMN). Only a single cell site of the first roaming network 3 is illustrated in Figure 1, but generally a plurality of cell sites may be provided.

The mobile device 1 is served by the first cell site 2, which provides access for the mobile device 1 to the first roaming network 3. Suitably, the mobile device 1 is connected to the first cell site 2 via wireless communication link 4. The wireless communication link 4 is a two-way communication link that allows the mobile device 1 to send data to, and receive data from, the cell site 2. The wireless communication link 4 may be, for example, a 2G, 3G, 4G or 5G mobile network. In general, the communication link may be any radio network and it will be appreciated that the principles described herein may be applied to other types of communications network.

The first cell site 2 is connected via a network connection 5 to the first roaming network 3. The network connection 5 may be a wireless connection or a wired connection. The network connection 5 may be formed in a conventional manner. The first roaming network 3 includes a first server 6. Together the mobile device 1 and the first server 6 may have a client-server relationship.

The first roaming network 3 is operated by a third-party operator, as opposed to a home network 7 operated by the home operator. When establishing connection with the first roaming network 3 via the cell site 2, the mobile device 1 transmits subscriber information to the mobile network 3, e.g. to the first server 6, which queries this information with the home network 7 via network connection 8 with a home network server 9 of the home network 7. Upon confirming the subscriber information, the first roaming network 3 allows the mobile device 1 to maintain connection and utilise services, such as voice calls. As such, the mobile device 1 is said to be "network roaming" or simply "roaming".

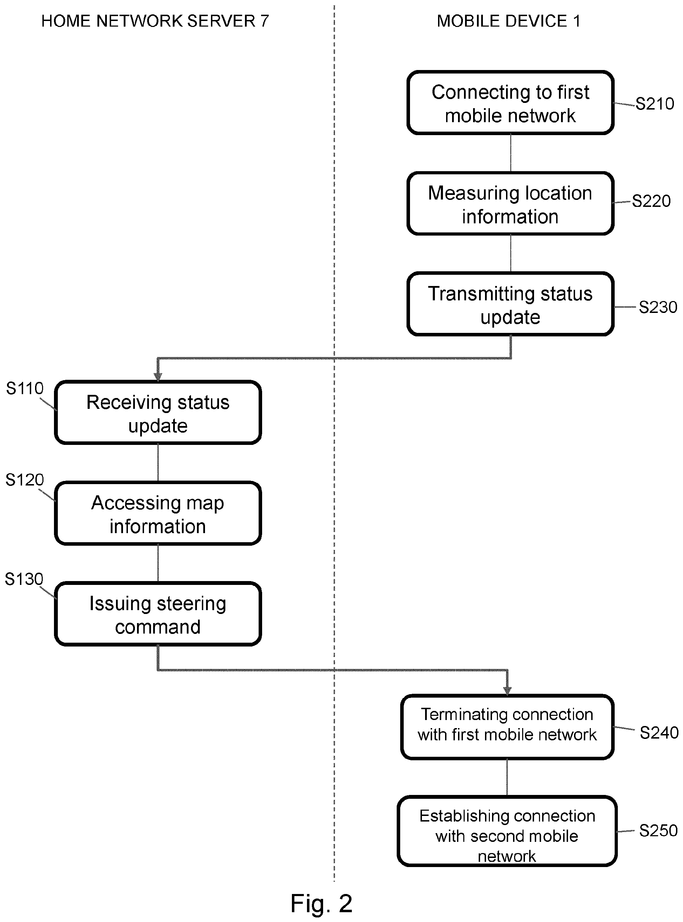

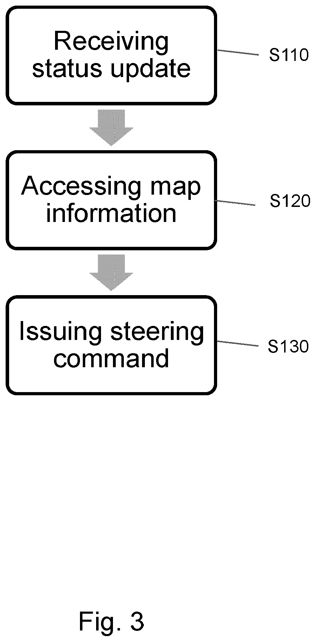

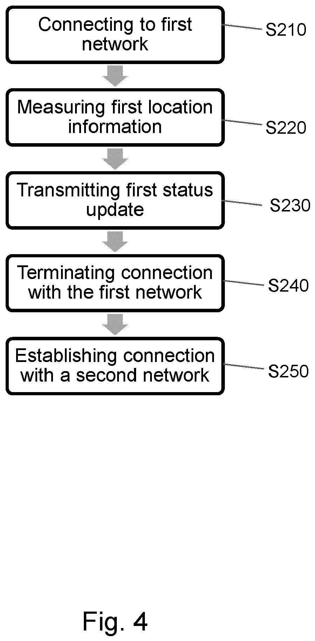

Figures 2, 3 and 4 illustrate control of the mobile device 1 which is network roaming, as described with reference to Figure 1. In Figure 3, a method of managing the mobile device 1 is illustrated from the perspective of the home network server 9. In Figure 4, a method of operating the mobile device 1 is illustrated from the perspective of the mobile device 1. In Figure 2, the interaction between the home network server 9 and the mobile device 1 is illustrated.

In a situation where multiple networks are available to the mobile device 1, the operator of the home network 7 may wish to manage connection of the mobile device 1 since there may be a preferred mobile network to which the mobile device 1 can connect. This may be, for example, a network providing better network service experience to the user of the mobile device 1 or a network to which the mobile device 1 can connect at reduced cost for the home network operator.

In a step S210, the mobile device 1 connects to the first roaming network 3; for example as described above with reference to Figure 1. As such, the mobile device 1, and in particular the subscriber/SIM, is successfully authenticated and allowed access to service provided by the first roaming network 3.

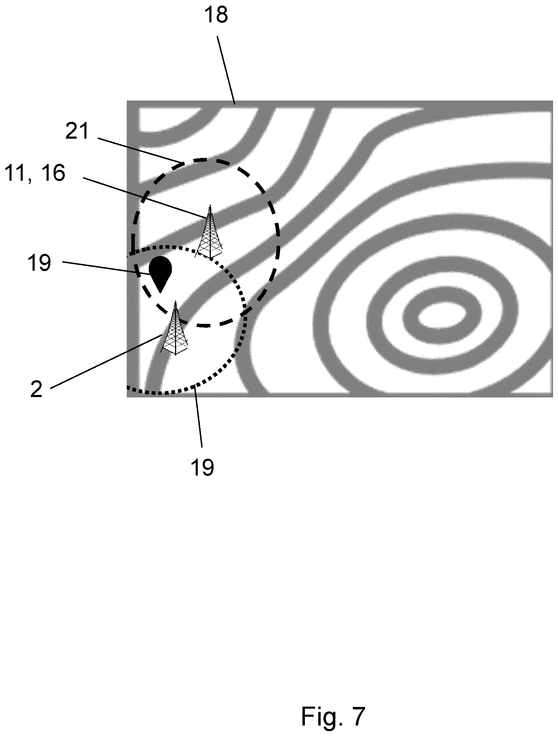

In a step S220, the mobile device 1 measures location information indicative of a geographic location of the mobile device 1. The location information is used for approximating the geographic location of the mobile device 1, i.e. an actual physical location of the mobile device 1, and will be described further with reference to Figure 7.

In a step S230, the mobile device 1 transmits a status update via the first roaming network 3 to the home network server 9. The status update comprises the location information measured by the mobile device 1.

The status update further comprises roaming information indicating connection of the mobile device 1 with the first roaming network 3. The location information and the roaming information may be transmitted in a single transmission or in separate transmissions.

In a step S110, the home network server 9 receives the status update from the mobile device 1.

In a step S120, the home network server 9 accesses map information. Accessing the map information may include connecting to a remote server on which the map information is stored, or may include accessing locally stored map information.

The map information relates to a geographic area in which the geographic location of the mobile device 1 is included. As such, the geographic location is a particular location within the geographic area.

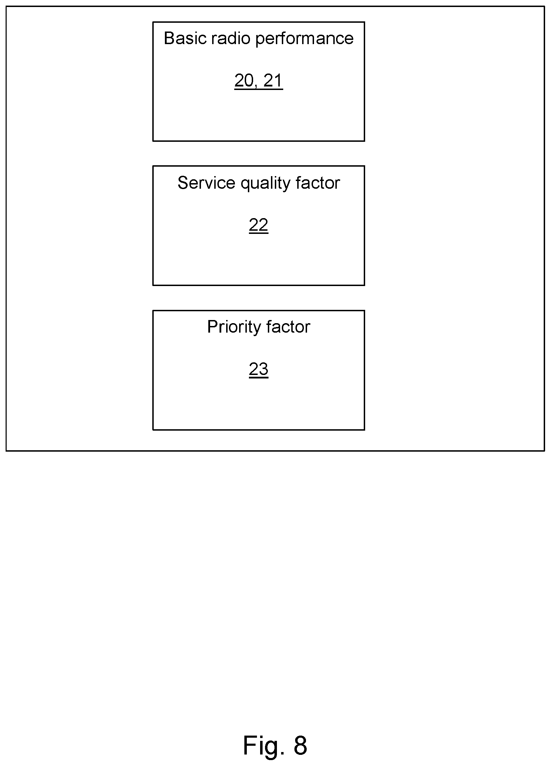

The map information includes network connection information for each of a plurality of networks, including the first roaming network 3, in the geographic area. The map information and the network connection information will be described below with reference to Figures 7 and 8.

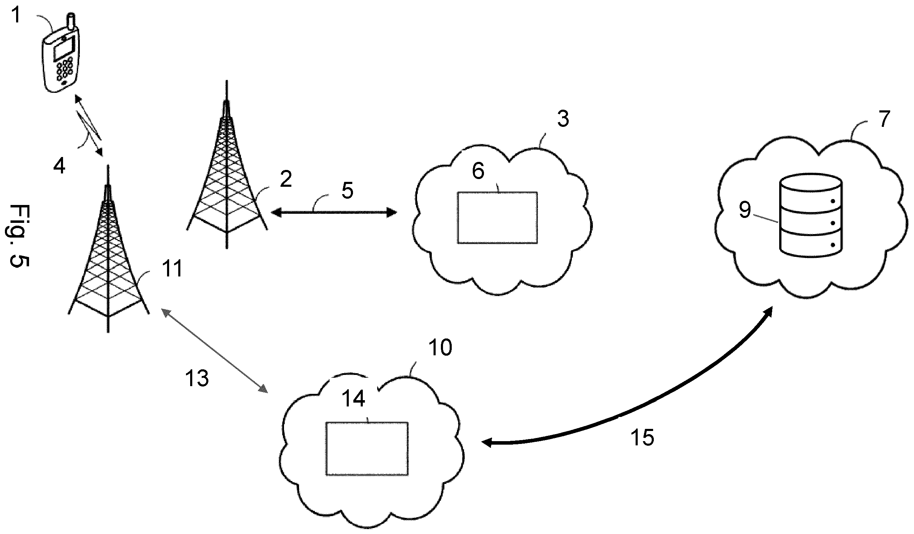

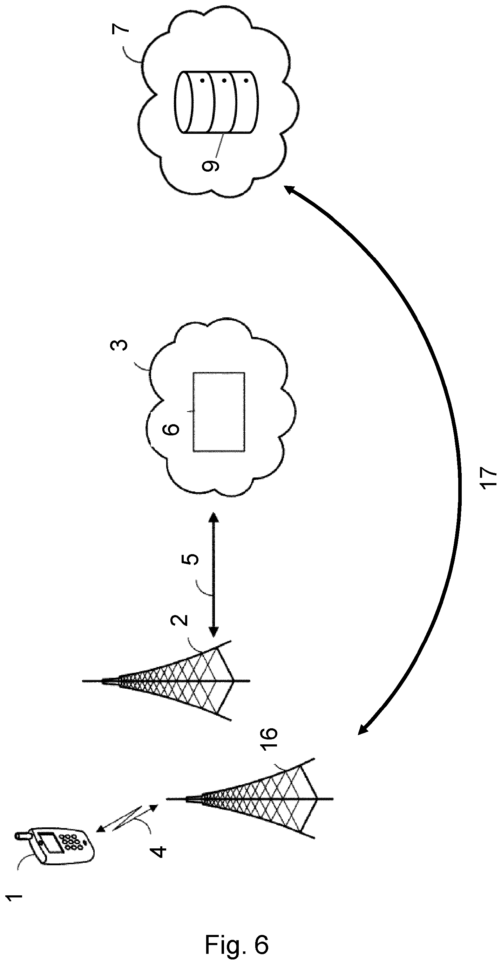

In a step S130, the home network server 9 issues a steering command to the mobile device 1 to instruct the mobile device 1 to terminate connection with the first roaming network 3 and to establish connection with an available network of the plurality of networks recorded in the map information and different from the first roaming network 3. The available network may be a second roaming network (see Figure 5 and the corresponding description below), or may be the home network (see Figure 6 and the corresponding description below).

In a steps S240 and S250, the mobile device 1 terminates connection with the first mobile network 3 and establishes connection with the available network in response to receiving the steering command instructing the mobile device 1 to terminate connection with the first roaming network 3 and establish connection with the available network.

With reference to Figures 5 and 6 described below, establishing connection with a second roaming network and establishing connection with the home network are described, respectively. A situation where connection is made with a second roaming network may arise, for example, in the case of international roaming, i.e. where the mobile device 1 is connected to a network in a country which is different from the country of the home network. A situation where connection is made with the home network may arise, for example, in the case of national roaming, i.e. where the mobile device 1 is in the same country as the home network.

Figure 5 shows the mobile device 1 having established connection with a second roaming network 10 in response to receiving a corresponding steering command from the home network server 9. Suitably the map information accessed by the home network server 9 includes network connection information about the second roaming network 10, such as information indicating that the second roaming network 10 is available at the geographic location of the mobile device 1.

The second roaming network 10 is operated by another third-party operator and, accordingly, the mobile device 1 is network roaming when connected with the second roaming network 10 as shown in Figure 4.

Similar to the connection with the first roaming network 3 described above, the mobile device 1 is connected to a second cell site 11, which provides access for the mobile device 1 to the second roaming network 9. Suitably, the mobile device 1 is connected to the second cell site via a wireless communication link 12.

The second cell site 11 is connected via a network connection 13 to the second roaming network 10, and the second roaming network 10 includes a second server 14. Together the mobile device 1 and the second server 14 may have a client-server relationship. The second server 14 is configured to exchange information with the home network 7 via network connection 15 with the home network server 9 of the home network 7.

Figure 6 shows the mobile device 1 having established connection with the home network 7 in response to receiving a corresponding steering command from the home network server 9. Suitably the map information accessed by the home network server 9 includes network connection information about the home network 7, such as information indicating that the home network 7 is available at the geographic location of the mobile device 1.

As shown in Figure 6, the mobile device 1 is connected to a home network cell site 16, which provides access for the mobile device 1 to the home network 7. The home network cell site 16 is connected via a network connection 17 to the home network 7.

Since the home network 7 is operated by the home network operator, the mobile device 1 is not roaming when connected with the home network 7 as shown in Figure 5.

Figures 7 and 8 illustrate the map information and the location information. More particularly, Figure 7 illustrates the map information in combination with the location information, while Figure 8 illustrates the network connection information included in the map information.

The geographic area 18 of the map information includes the geographic location 19 of the mobile device 1. The geographic location 19 is based on the location information sent by the mobile device 1 to the home network server 9. The location information comprises any suitable data indicative of the geographic location of the mobile device 1, such as measurements taken by a GPS module included in the mobile device 1 or according to the disclosure of WO 2019/030464 A1. As such, the geographic location 19 of the mobile device 1 as indicated by the location information may be an approximation to the actual physical location of the mobile device 1, for example within an accuracy of tens of metres or hundreds of metres.

The geographic area 18 may be a country, such as the United Kingdom, and the geographic location of the mobile device 1 may a particular location within said country, for example a location in the United Kingdom corresponding to a particular set of longitude and latitude coordinates.

The network connection information comprises information suitable for comparing a network service experience with each of the plurality of networks. As such, the network connection information may include, for example, information about basic radio performance, e.g. signal strength information of each of the plurality of networks within the geographic area. More particularly, first basic radio performance information 20, such as signal strength information 20, relating to the first roaming network 3 and second basic radio performance information 20, such as signal strength information 21, relating to the second roaming network 10 or the home network 7. Generally, poor basic radio performance may be an indication that overall service quality of a network is poor.

The network connection information may include, for example, a service quality factor 22 indicative of at least one measure of service quality, such as the number of radio link failures as a measure of service quality; or the ratio of successful call setups over all call setups; or the ratio of successful call ends over all calls or call ends; or latency and throughout of data; or the number of attempts for successful SMS message submission.

The network connection information may include, for example, a network priority factor 23 for each network. The network priority factor may be assigned to each network based on, for example, a cost factor associated with connection of a mobile device to said network.

The map information generally need not include location information of the first cell site 2, the second cell site 11 or the home network cell site 16. These cell sites 2, 11, 16 are shown in Figure 7 for illustrative purposes.

Based on the map information, the home network server 9 may compare the network connection information of the first roaming network and the available network recorded for the geographic location of the mobile device 1 indicated by the location information. Thus, the steering command may be issued dependent on network connection information relating to the geographic location of the mobile device 1.

The home network server 9 may compare the network connection information the first roaming network and the network connection information of the available network recorded for a second geographic location, which is different from the first geographic location. Thus, the steering command may be issued dependent on network connection information relating to another geographic location, for example a location close to the geographic location of the mobile device 1.

As described with reference to Figures 2 and 3, the method of managing the mobile device 1 is performed by the home network operator using the home network server 9. In some examples, the method of managing the mobile device 1 is performed, for example, by a third-party service provider.

As described with reference to Figures 2 and 3, the method of managing the mobile device 1 comprises the step S110 of receiving the status update, and the step S120 of accessing the map information. These steps may be performed in either order.

As described with reference to Figures 2 and 4, the method of operating the mobile device 1 is performed by the mobile device 1. More particularly, the mobile device 1 may include a SIM (Subscriber Identity Module), e.g. a SIM device such as a SIM card or an eSIM or a microcontroller loaded with a virtual SIM, on which instructions for performing the method of operating the mobile device 1 may be stored. Moreover, the SIM device may have limited compute capability sufficient to perform the method of operating the method, for example as a small application referred to herein as a SIM applet.

The network connection information relating to roaming networks, as used by the method described with reference to Figures 2 and 3, may generally not be available to the home network operator, since this information relates to a different network. As such, the map information including the network connection information may need to be generated, i.e. the roaming networks 'mapped'.

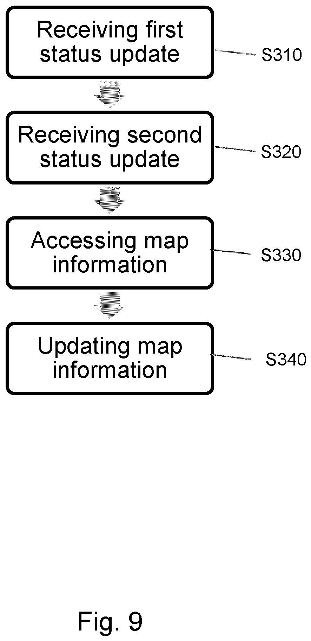

Figure 9 illustrates a method of mapping a mobile network, such as the first roaming network 3. This method of mapping the mobile network may be performed by the home network operator or a third-party service provider. Here, the method is described as performed by the home network operator using the home network server 9.

The method of mapping the mobile network comprises a step S310 of receiving a first status update from the mobile device 1 and a step S320 of receiving a second status update from a second mobile device.

Each status update comprises roaming information indicating connection to a first roaming network of the respective mobile device; first location information indicative of a geographic location of the respective mobile device, and information indicative of connection performance with the first roaming network by the respective mobile device at its respective geographic location.

The connection performance of a roaming network quantifies performance of connection between the mobile device 1 and the roaming network. As such, the information indicative of connection performance may include information about basic radio performance, e.g. signal strength information as measured by the mobile device. The information indicative of connection performance may also or alternatively include information relating to service quality. The information relating to service quality may include at least one of the number of radio link failures; the ratio of successful call setups over all call setups; the ratio of successful call ends over all calls or call ends; latency and throughout of data; the number of attempts for successful SMS message submission.

The method of mapping the mobile network comprises a step S330 of accessing map information. The map information includes, for each of a plurality of networks including the first roaming network, network connection information relating to a geographic area which includes the geographic locations of the first mobile device and the second mobile device.

The method of mapping the mobile network comprises a step S340 of updating the network connection information relating to the first roaming network based on the first status update and the second status update.

The method of mapping the mobile network may comprise receiving a third status update from the first mobile device. The third status update comprises roaming information indicating that the first mobile device is connected to the first roaming network; location information indicative of a second geographic location of the first mobile device; and information indicative of connection performance at the second geographic location.

The method of mapping the mobile device may further comprise updating the network connection information relating to the first roaming network based on the third status update.

The method of mapping the mobile network may comprise receiving a fourth status update from the first mobile device. The fourth status update comprises roaming information indicating that the first mobile device is connected to a second roaming network; location information indicative of a third geographic location of the first mobile device; and information indicative of connection performance at the third geographic location.

The method of mapping the mobile network may further comprise updating the network connection information relating to the second roaming network based on the fourth status update.

The method of mapping as described with reference to Figure 9 may be carried out separately to or together with the methods described with reference to Figures 2, 3 and 4.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

### References

A number of publications are cited above in order to more fully describe and disclose the invention and the state of the art to which the invention pertains. Full citations for these references are provided below. The entirety of each of these references is incorporated herein.

## Claims

1. A method of managing a roaming mobile device, comprising:
receiving a first status update from a mobile device, the first status update comprising:
roaming information indicating that the mobile device is connected to a first network, and location information indicative of a geographic location of the mobile device;
accessing map information which, for each of a plurality of networks, includes network connection information relating to a geographic area,
wherein the plurality of networks includes the first network and a second network,
wherein the geographic area includes the geographic location of the mobile device; and
issuing a steering command to the mobile device to instruct the mobile device to terminate connection with the first network and to establish connection with the second network of the plurality of networks, wherein issuing the steering command is based on the network connection information.

2. The method according to claim 1,
wherein issuing the steering command includes using the map information to compare the network connection information of the first network and the network connection information of the second network recorded for the first geographic location.

3. The method according to claim 1 or 2,
wherein issuing the steering command includes using the map information to compare the network connection information of the first network and the network connection information of the second network recorded for a second geographic location,
wherein the second geographic location is different from the first geographic location.

4. The method according to any preceding claim,
wherein the network connection information includes a first network priority factor associated with connection of the mobile device to the first network and a second network priority factor associated with connection of the mobile device to the second network, and
wherein issuing the steering command includes comparing the first network priority factor and the second network priority factor.

5. The method according to any preceding claim,
wherein the first status update further includes information about connection performance of the first network at the geographic location of the mobile device, and
the method further comprises:
updating the network connection information based on the first status update.

6. The method according to any of claims 1 to 5, wherein
either: the second network is a second roaming network;
or: the second network is the home network and the steering command instructing the mobile device to establish connection with the second network causes the mobile device to cease roaming.

7. The method according to any preceding claim, further comprising:
receiving a second status update from the mobile device including:
roaming information indicating that the mobile device is connected to the second network, location information indicative of a second geographic location of the mobile device;
issuing a second steering command to the mobile device to instruct the mobile device to terminate connection with the second network and to establish connection with the first network or a third network of the plurality of networks, wherein issuing the second steering command is based on the network connection information.

8. A method of operating a roaming mobile device, comprising:
connecting the mobile device to a first network;
measuring first location information indicative of a first geographic location of the mobile device within a first geographic area;
transmitting a first status update via the first network, the first status update comprising:
roaming information indicating that the mobile device is connected to the first network, and the first location information;
terminating connection with the first network and establishing connection with a second network in response to receiving a steering command instructing the mobile device to terminate connection with the first network and establish connection with the second network.

9. The method according to claim 8, further comprising:
measuring connection performance of the first network at the geographic location of the mobile device, and
wherein the first status update further includes information indicative of the connection performance measured by the mobile device.

10. The method according to claim 8 or 9, further comprising:
measuring second location information indicative of a second geographic location of the mobile device;
transmitting a second status update via the second network, the second status update comprising the second geographic location information; and
receiving a second steering command, the second steering command instructing the mobile device to terminate connection with the second network and to establish connection with the first network or a third network.

11. The method according to claim 10, further comprising:
wherein measuring the second location information is conditional on at least one of:
changing from a first cell site of the second network to a second cell site of the second network, or elapsing of a predetermined time interval from measuring the first location information.

12. A SIM, optionally provided as a SIM card or an e-SIM, for use with a mobile device, the SIM including instructions to perform the method of any one of claims 9 to 11.

13. A method of mapping a roaming network, comprising:
receiving a first status update from a first mobile device comprising:
first roaming information indicating that the first mobile device is connected to a first network;
first location information indicative of a first geographic location of the first mobile device, and information indicative of connection performance with the first network by the first mobile device at the first geographic location of the first mobile device;
receiving a second status update from a second mobile device comprising:
second roaming information indicating that the second mobile device is connected to the first network;
second location information indicative of a geographic location of the second mobile device, and information indicative of connection performance with the first network by the second mobile device at the geographic location of the second mobile device;
accessing map information which, for each of a plurality of networks, includes network connection information relating to a geographic area,
wherein the plurality of networks includes the first network;
wherein the geographic area includes the first geographic location of the first mobile device and the geographic location of the second mobile device; and
updating the connection performance relating to the first network based on the first status update and the second status update.

14. The method of claim 13, further comprising:
receiving a third status update from the first mobile device comprising:
third roaming information indicating that the first mobile device is connected to the first network;
third location information indicative of a second geographic location of the first mobile device, and information indicative of connection performance with the first network by the first mobile device at the second geographic location of the first mobile device;
accessing the map information;
updating the network connection information relating to the first network based on the third status update.

15. The method of claim 13 or 14, further comprising:
receiving a fourth status update from the first mobile device comprising:
fourth roaming information indicating that the first mobile device is connected to a second network of the plurality of networks;
fourth location information indicative of a third geographic location of the first mobile device, and information indicative of connection performance with the second network by the first mobile device at the third geographic location of the first mobile device; and
accessing the map information,
updating the network connection information relating to the second roaming network based on the fourth status update.
